# EUROPÄISCHE PATENTSCHRIFT

(11) **EP 3 291 945 B1**
(45) Veröffentlichungstag und Bekanntmachung des Hinweises auf die Patenterteilung: **09.06.2021**
(21) Anmeldenummer: 16719215.2
(22) Anmeldetag: 28.04.2016
(51) Int. Cl.: B23Q 11/10, F16N 7/32

(54) **VORRICHTUNG ZUR MINIMALMENGENSCHMIERUNG**
MICROLUBRICATION SYSTEM
DISPOSITIF DE LUBRIFICATION EN QUANTITÉ MINIMALE

(30) Priorität: 05.05.2015 DE 102015005634
(43) Veröffentlichungstag der Anmeldung: 14.03.2018
(73) Patentinhaber: Bielomatik Schmiertechnik GmbH, 72636 Frickenhausen (DE)
(72) Erfinder: HAAS, Reiner, 72555 Metzingen (DE)
(74) Vertreter: Ostertag & Partner Patentanwälte mbB
(86) Internationale Anmeldenummer: PCT/EP2016/000688
(87) Internationale Veröffentlichungsnummer: WO 2016/177455

(56) Entgegenhaltungen:
- WO-A1-03/070382
- DE-A1- 10 132 857
- DE-A1-102004 034 689
- DE-U1-202009 017 542

## Beschreibung

### 1. Gebiet der Erfindung

Die Erfindung betrifft eine Vorrichtung nach dem Oberbegriff des Anspruchs 1.

Die Erfindung betrifft ferner ein Verfahren zum Betreiben einer Vorrichtung zur Minimalmengenschmierung für eine Bearbeitungsmaschine.

### 2. Beschreibung des Standes der Technik

Im handwerklichen und industriellen Fertigungsbereich kommt der spanenden Bearbeitung von Werkstücken zu Formgebungszwecken eine erhebliche Bedeutung zu. Entsprechende Verfahren wie beispielsweise Fräsen, Bohren, Schleifen, Drehen und dergleichen werden dabei auf unterschiedlichste Materialien, insbesondere metallische Materialien wie Stahl, angewandt.

Häufig ist es bei spanenden Bearbeitungsverfahren erforderlich, die Kontaktfläche zwischen Werkstück und Werkzeug mit Hilfe eines Schmiermittels (meist Öl mit verschiedenen Additiven; nachfolgend werden die Begriffe Schmiermittel und Öl synonym verwendet) zu schmieren und/oder zu kühlen.

Hierzu werden zunehmend Vorrichtungen zur Minimalmengenschmierung verwendet, die das Schmiermittel mit Hilfe von Druckluft meist durch das Werkzeug hindurch in den Spanbereich der Bearbeitungsmaschine einbringen. Dies hat gegenüber der herkömmlichen Schmierung mit Schmiermittel-Wasser-Emulsionen Vorteile, da die Schmierwirkung von Emulsionen geringer ist. Daher werden bei der Minimalmengenschmierung deutlich kleinere Mengen an Schmiermittel benötigt und sogar bessere Spanergebnisse bei höherem Durchsatz erreicht. Darüber hinaus sind die anfallenden Späne weniger mit Schmiermittel verunreinigt.

Derartige Vorrichtungen sind beispielsweise aus der DE 197 25 345 A1 und der DE 103 49 642 A1 bekannt.

Aus der DE 10 2004 034 689 A1 ist ferner eine gattungsgemäße Minimalmengenschmier-Vorrichtung bekannt, bei der es mittels Durchfluss- und Drucksensoren möglich ist, den Förder- und Schmier- /Wirkmittelstrom automatisiert zu definieren.

Nachteilig an den bisher bekannten Vorrichtungen zur Minimalmengenschmierung ist allerdings deren vergleichsweise hoher apparativer Aufwand zur Steuerung und Überwachung eines konstanten Verhältnisses von Schmiermittel zu Luft. So muss beispielsweise der Öldruck und die Temperatur mit hohem apparativem Aufwand konstant gehalten werden. Zudem müssen Änderungen der Viskosität unterschiedlicher Schmiermittel durch kalibrieren kompensiert werden.

### ZUSAMMENFASSUNG DER ERFINDUNG

Es ist daher Aufgabe der vorliegenden Erfindung eine Vorrichtung zur Minimalmengenschmierung anzugeben, die bezüglich der Ansteuerung und Überwachung verbessert ist.

Erfindungsgemäß wird dies durch eine Vorrichtung nach Anspruch 1 erreicht.

Die Erfinder haben erkannt, dass durch die Verwendung von smarten Komponenten in einer Vorrichtung zur Minimalmengenschmierung das Verhältnis von Schmiermittel und Luft besser kontrolliert werden kann, ohne dass der Aufwand zur Steuerung und Überwachung und vor allem zur Instandhaltung der verschiedenen Komponenten zu stark ansteigt.

Unter dem Begriff einer smarten Komponente sind Bauteile zu verstehen, die mit einer zugehörigen Sensorik und Elektronik versehen sind. Anders als in der bei Bearbeitungsmaschinen sonst üblichen Vorgehensweise werden dabei die ordnungsgemäße Funktion oder andere Parameter der Bauteile direkt an den Bauteilen und nicht über separate Sensoren einer übergeordneten Anlagensteuerung erfasst. Stattdessen wird die Logik und Intelligenz zur Steuerung und Überwachung der smarten Komponente in unmittelbaren Bezug zu dieser gebracht. Insbesondere erfolgt die Auswertung der eigentlichen Sensorsignale direkt in der zugehörigen Elektronik, die dann ihrerseits nur entsprechende Kommunikationsdaten und Endergebnisse, wie beispielsweise einen Fehlercode bei einem Versagen des Bauteils, an die übergeordnete Anlagensteuerung übermittelt.

Die übergeordnete Anlagensteuerung vereinfacht sich dadurch, da dort keine Informationen über die genaue Ausgestaltung und internen Funktionsweisen der Bauteile vorgehalten werden müssen. Insgesamt vereinfacht sich durch die Integration des Expertenwissens über die einzelnen Bauteile in diese selbst die Installation, Bedienung und Wartung der gesamten Vorrichtung.

Erfindungsgemäß weist das Dosierventil eine zugehörige Sensorik- und Steuerungseinheit mit eigenem Mikroprozessor auf, welche den Betriebszustand des Dosierventils eigenständig erfassen und auswerten kann.

Die Sensorik- und Steuerungseinheit weist dabei eine Schaltung, insbesondere einen Shunt oder einen Hallsensor, auf, mit der sich der Stromverlauf über eine Magnetspule des Dosierventils beim Öffnen des Dosierventils erfassen lässt. Der Mikroprozessor kann diesen Stromverlauf auswerten, um einen am Dosierventil anliegenden Schmiermitteldruck und/oder die Viskosität des Schmiermittels zu bestimmen. Auf diese Weise sind keine externen Sensoren oder Messeinrichtungen notwendig, mit welchen der Schmiermitteldruck oder die Viskosität bestimmt werden. Ferner können elektrische Einflüsse der Zuleitungen an die Magnetspulen ohne vorherige Kalibrierung kompensiert werden.

Die Sensorik- und Steuerungseinheit kann derart eingerichtet sein, dass sie in Abhängigkeit des Schmiermitteldrucks und/oder der Viskosität des Schmiermittels eine Dosierungskorrektur vornimmt, insbesondere die Öffnungszeit des Dosierventils anpasst. Auf diese Weise kann die übergeordnete Anlagensteuerung nur die aufgrund anderer Parameter der Bearbeitungsmaschine, wie beispielsweise dem verwendeten Werkzeug, dem zu bearbeitenden Material, der Schnittgeschwindigkeit usw., eine gewünschte Dosierung für das Schmiermittel an das Dosierventil übermitteln. Die der smarten Komponente zugehörige Logik sorgt dann dafür, dass die gewünschte Dosierung auch bei wechselnden Schmiermitteldrücken und/oder Viskosität beibehalten wird.

Auch die Drehdurchführung kann eine zugehörige Sensorik- und Steuerungseinheit mit eigenem Mikroprozessor aufweisen, welche den Betriebszustand Drehdurchführung eigenständig erfassen und auswerten kann.

Die Sensorik- und Steuerungseinheit der Drehdurchführung kann dabei mindestens einen der folgenden Sensoren umfassen: einen Luftdrucksensor für den eingehenden Luftdruck; einen Luftdrucksensor für den Luftleckagedruck; einen Sensor für den Öldruck; einen optischen Ölleckagesensor; einen Drehzahlgeber; einen Vibrationssensor; einen Temperatursensor. Wie weiter unten näher erläutert wird, deckt jeder Sensor andere Teilaspekte bei der Überwachung der Drehdurchführung ab. Besonders vorteilhaft ist daher wenn all diese Sensoren vorgesehen sind.

Die smarten Komponenten können einen vorzugsweise nicht-volatilen Datenspeicher aufweisen, in welchem Auswertungsdaten gespeichert werden können. Dadurch kann insbesondere im Hinblick auf Verschleiß eine zeitliche Entwicklung der ermittelten Werte überwacht werden, beispielsweise bei einer Speicherung der Amplitude von Vibrationsfrequenzen, die auf einen Lagerschaden hindeuten.

### KURZE BESCHREIBUNG DER ZEICHNUNGEN

Nachstehend wird die Erfindung anhand eines Ausführungsbeispiels unter Bezugnahme auf die Zeichnungen erläutert. Darin zeigen:
- Figur 1: eine schematische Darstellung einer Vorrichtung zur Minimalmengenschmierung an einer Bearbeitungsmaschine mit einem drehenden Werkzeug;
- Figur 2: eine Vorderansicht einer Baueinheit der Vorrichtung zur Minimalmengenschmierung, die eine Drehdurchführung und ein Dosierventil aufweist;
- Figur 3: eine Draufsicht auf die in Figur 2 gezeigte Baueinheit;
- Figur 4: eine Steuerkarte zur Ansteuerung der Baueinheit;
- Figur 5: eine Seitenansicht von links auf die in den Figuren 2 und 3 gezeigte Baueinheit;
- Figur 6: einen Teilschnitt der Baueinheit entlang der in Figur 5 gezeigten Schnittlinie A-A;
- Figur 7: eine Rückansicht der Baueinheit;
- Figur 8: einen Teilschnitt der Baueinheit entlang der in Figur 7 gezeigten Schnittlinie B-B;
- Figur 9: einen Teilschnitt der Baueinheit entlang der in Figur 7 gezeigten Schnittlinie C-C;
- Figur 10: einen Teilschnitt der Baueinheit entlang der in Figur 7 gezeigten Schnittlinie D-D;
- Figur 11: ein Diagramm eines typischen Stromverlaufs an dem Dosierventil.

### DETAILLIERTE BESCHREIBUNG EINES BEVORZUGTEN AUSFÜHRUNGSBEISPIELS

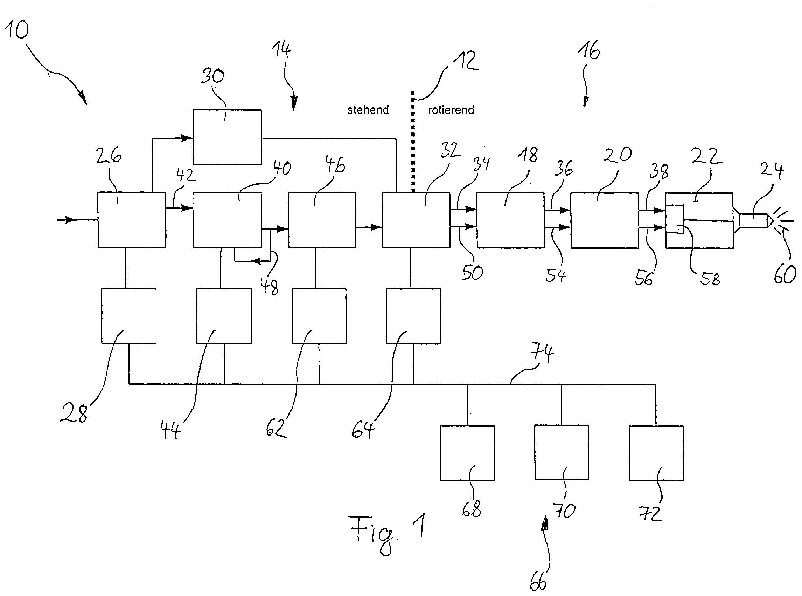

Figur 1 zeigt als Beispiel für eine Vorrichtung zur Minimalmengenschmierung eine insgesamt mit 10 bezeichnete Minimalmengenschmiereinrichtung in einer nicht näher beschriebenen Bearbeitungsmaschine, beispielsweise in einer CNC-Fräsmaschine.

Wie durch eine gestrichelte senkrechte Linie 12 dargestellt, lässt sich die Bearbeitungsmaschine schematisch im Wesentlichen in einen stehenden Teil 14 und einen drehenden Teil 16 unterteilen.

Der drehende Teil 16 umfasst sämtliche Komponenten, die sich im laufenden Betrieb der Bearbeitungsmaschine drehen.

Dies sind vor allem eine Spindel 18, eine mit dieser verbundene Übernahmeeinheit 20 und ein Werkzeughalter 22, in welchen das eigentliche Bearbeitungswerkzeug 24, beispielsweise ein Bohrer oder ein Fräser, arretiert wird.

Im stehenden Teil 14 der Bearbeitungsmaschine ist ein nicht gezeigter Antrieb für die Spindel 16 angeordnet. Ferner sind Antriebe vorgesehen, die je nach Bearbeitungsmaschinentyp entweder das zu bearbeitende Werkstück relativ zur Spindel 18 bzw. dem Bearbeitungswerkzeug 24 bewegen oder umgekehrt die Spindel 18 bzw. das Bearbeitungswerkzeug 24 relativ zum Werkstück bewegen. Insoweit ist der Begriff stehend also nur in Bezug auf die drehende Spindel 18 zu verstehen, da der stehende Teil 14 ebenfalls beispielsweise über einen XYZ-Tisch relativ zum Werkstück bewegt wird.

Die Minimalmengenschmiereinrichtung 10 weist im stehenden Teil 14 der Bearbeitungsmaschine zunächst eine Pneumatikeinheit 26 auf, die eingangsseitig mit Druckluft versorgt wird. Ausgangsseitig liefert die Pneumatikeinheit 26 Druckluft mit einem variierbaren Luftdruck. Dazu ist die Pneumatikeinheit 26 mit einer Sensorik- und Steuerungseinheit 28 verbunden.

Im weiteren Verlauf ist die Pneumatikeinheit 26 mit einem Luftventil 30 verbunden.

Das Luftventil 30 ist stromab mit einer Drehdurchführung 32 verbunden, die derart ausgestaltet ist, dass die Druckluft in einen Luftführungskanal 34 der drehenden Spindel 18 übergeben wird. An den Luftführungskanal 34 der Spindel 18 schließen sich entsprechende Luftführungskanäle 36, 38 in der Übernahmeeinheit 20 und dem Werkzeughalter 22 an.

Ferner weist die Minimalmengenschiereinrichtung 10 im stehenden Teil 14 der Bearbeitungsmaschine einen Ölförderer 40 auf, mit welchem aus einem nicht gezeigten Ölvorrat ein variierbarer Öldruck erzeugt wird. Im hier gezeigten Beispiel ist der Ölförderer 40 eingangsseitig über eine Referenzdruckleitung 42 mit der Pneumatikeinheit 26 verbunden, um einen Referenzdruckpunkt für den Ölförderer 40 festzulegen.

Der Referenzdruckpunkt kann jedoch auch ausschließlich auf elektronischem Wege an den Ölförderer 40 übermittelt werden. Dazu ist die der Ölförderer 40 ebenfalls mit einer zugehörigen Sensorik- und Steuerungseinheit 44 verbunden.

Ausgangsseitig ist der Ölförderer 40 mit einem elektrisch steuerbaren Dosierventil 46 verbunden, das vorzugsweise als nichtproportionales Schnellventil ausgebildet ist. Die Verbindung umfasst dabei eine zum Ölförderer 40 zurückführende Ringleitung 48 zur Vermeidung von Luftblasen in dem vor dem Dosierventil 46 anstehenden Öl.

Ausgangsseitig ist das Dosierventil 46 ebenfalls mit der Drehdurchführung 32 verbunden, die derart ausgestaltet ist, dass das Öl getrennt von der Druckluft in einen Ölführungskanal 50 der drehenden Spindel 18 übergeben wird.

Entsprechende weitere Ölführungskanäle 52 und 54 laufen getrennt von den Luftführungskanälen 34, 36, 38 zur Übernahmeeinheit 20 und zum Werkzeughalter 22.

Erst im Werkzeughalter 22 ist eine Mischkammer 58 angeordnet, in welcher das Öl und die Druckluft zusammengeführt werden. Die Mischkammer 58 hat einen Mischkammerausgang, der mit einem oder mehreren Kanälen des Werkzeugs 24 selbst in Verbindung steht, sodass das Öl bis an den Schnittbereich des Werkzeugs 24 herangeführt wird und dort als Schmiermittelwolke 60 austritt.

Der Anteil des Öls in der Schmiermittelwolke 60 kann im Wesentlichen mit Hilfe des Dosierventils 46 gesteuert werden. Dies geschieht durch Verändern des Verhältnisses von Öffnungspulsdauer und Schließpulsdauer des Dosierventils 46.

Erfindungsgemäß sind die Drehdurchführung 32 sowie das Dosierventil 46 als smarte Komponenten ausgeführt. Das bedeutet, dass diese Komponenten über eigene zugehörige Sensorik- und Steuerungseinheiten 62 und 64 verfügen. Die Sensorik- und Steuerungseinheiten 62 und 64 verfügen dabei jeweils über einen eigenen Mikroprozessor, der die Ausgangssignale der Sensorik verarbeitet und entsprechende Kommunikationssignale an eine übergeordnete Anlagensteuerung 66 übermittelt.

Die Anlagensteuerung 66 umfasst im vorliegenden Beispiel einen Steuerungsrechner 68, eine Bedienerschnittstelle 70 sowie einen Internetzugang 72. Die einzelnen Komponenten sind dabei über eine Datenverbindung 74 (z.B. Ethernet oder WLAN) gekoppelt.

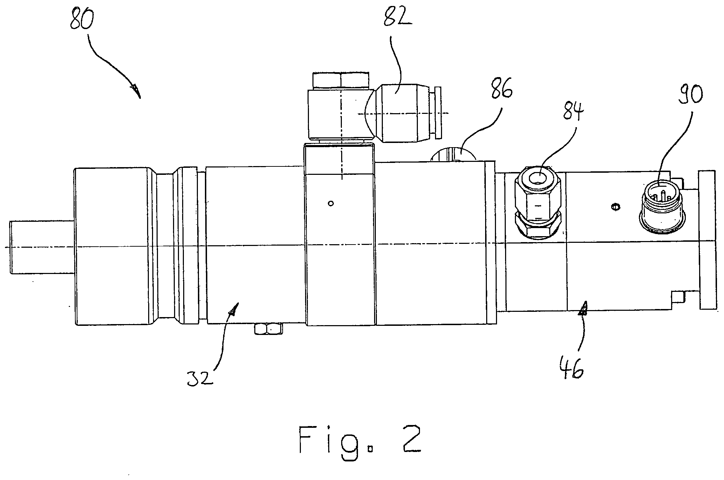

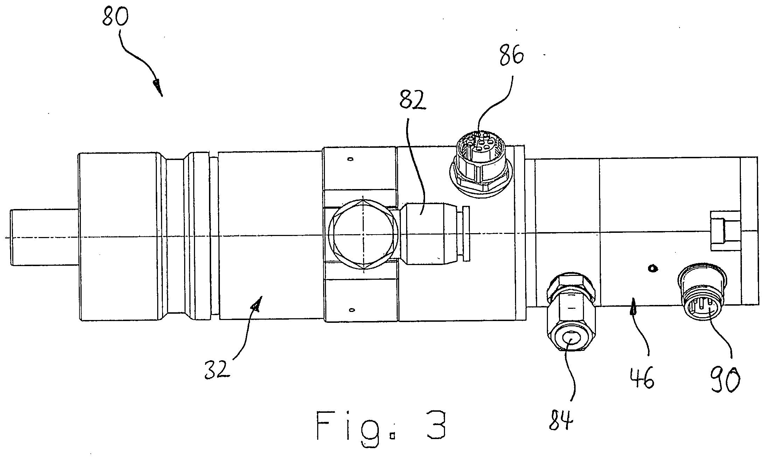

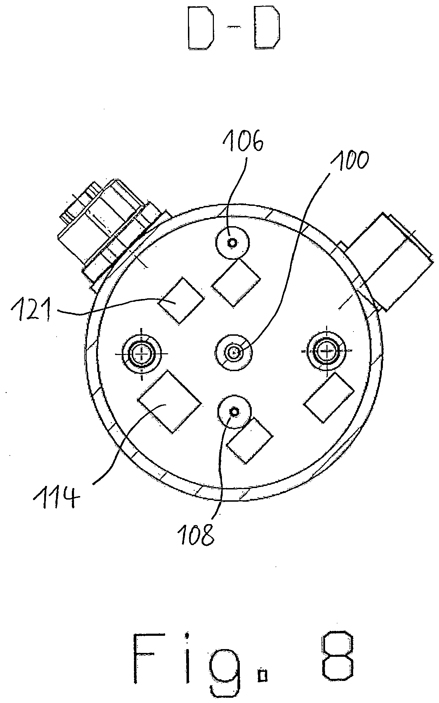

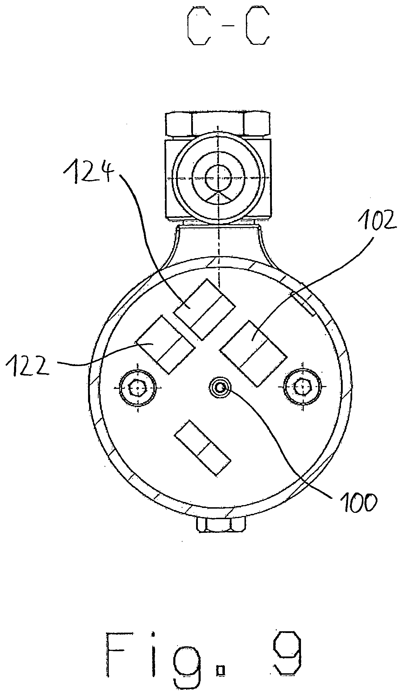

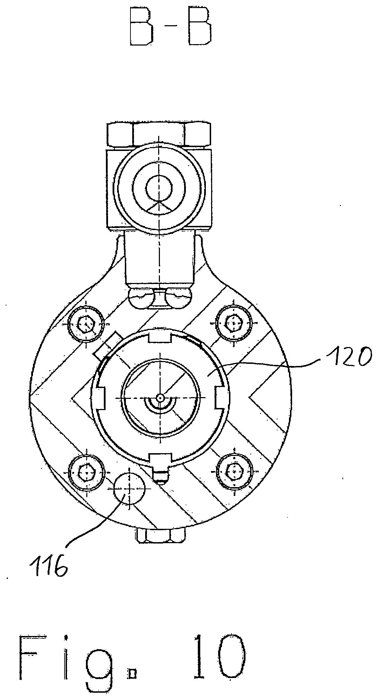

Als wesentliche Komponenten der Minimalmengenschmiereinrichtung 10 sind die Drehdurchführung 32 und das Dosierventil 46 als Baueinheit 80 in den Figuren 2 bis 10 nochmals genauer dargestellt.

In Figur 2 ist diese Baueinheit 80 in einer Seitenansicht dargestellt, wobei die zum drehenden Teil 16 der Bearbeitungsmaschine weisende Drehdurchführung 32 in der Zeichnung links angeordnet ist.

In dieser Ansicht sind ein Druckluftanschluss 82 an der Drehdurchführung 32 und ein Ölanschluss 84 an dem Dosierventil 46 erkennbar.

Ferner ist direkt an der Drehdurchführung 32 ein Datenanschluss 86 vorgesehen, da die zugehörige Sensorik- und Steuereinheit 64 Teil der Baueinheit 80 ist.

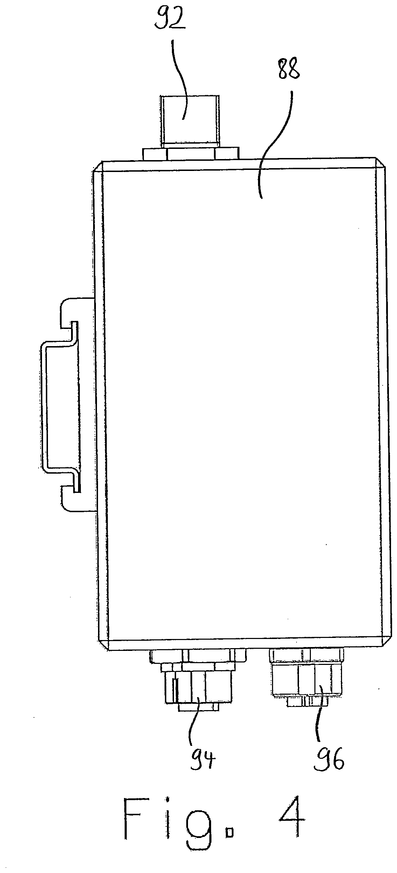

Im Gegensatz dazu ist für das Dosierventil 46 eine von der Baueinheit 80 separate Steuerkarte 88 vorgesehen (vgl. Figur 4), die mit einem Steuerkartenanschluss 90 des Dosierventils 46 verbunden ist. Die Steuerkarte 88 selbst umfasst einen Stromversorgungsanschluss 92, einen Ventilanschluss 94, der mit dem Steuerkartenanschluss 90 des Dosierventils 46 verbunden wird, und ebenfalls einen Datenanschluss 96 zur Integration in die Datenverbindung 74.

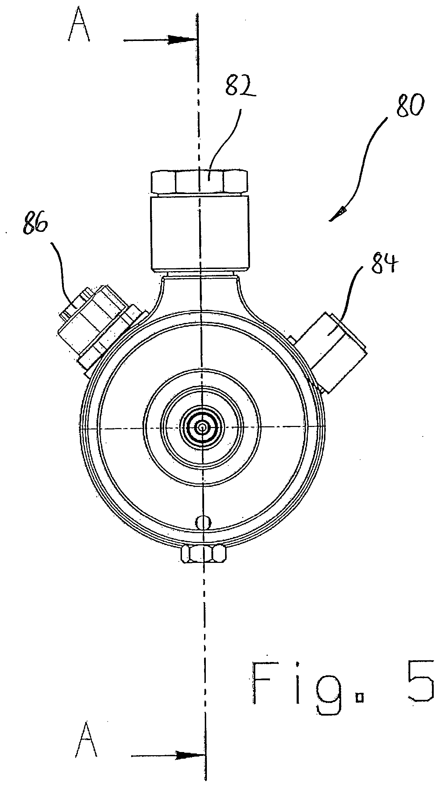

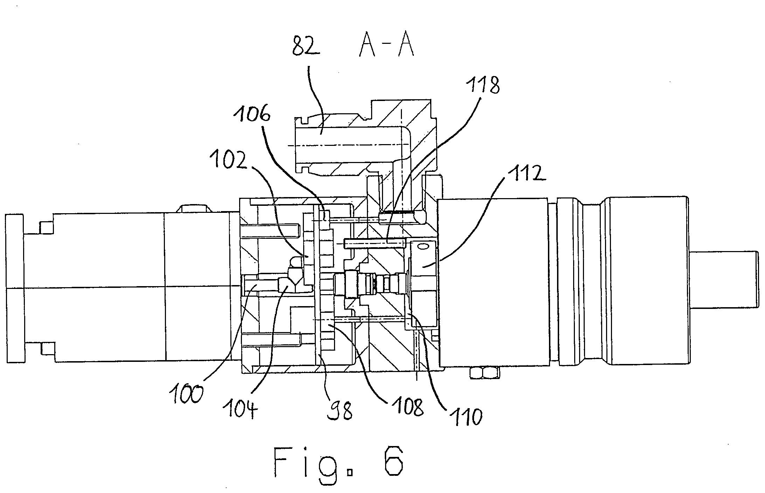

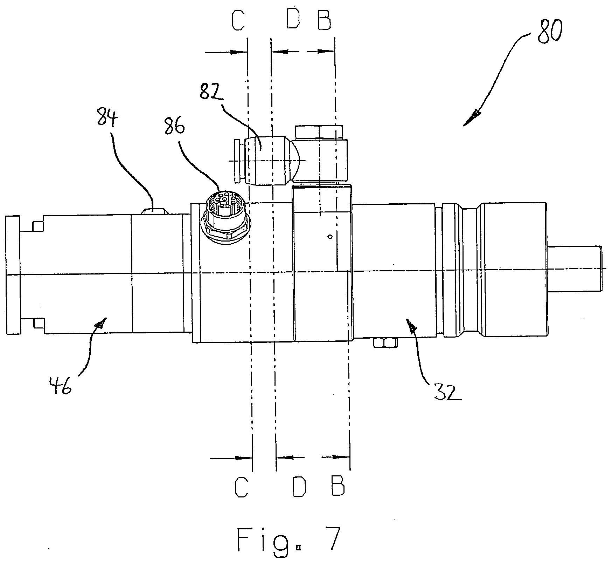

In den Figuren 5 und 7 sind Schnittlinien markiert, deren zugehörige Schnitte in den Figuren 6, 8, 9 und 10 dargestellt sind. In diesen Schnitten sind Details der Drehdurchführung 32 und der zugehörigen integrierten Sensorik- und Steuerungseinheit 64 gezeigt.

Die Sensorik- und Steuerungseinheit 64 weist eine Platine 98 auf, die um einen Ölführungskanal 100 herum in Querrichtung angeordnet ist.

Die Platine 98 trägt einen Öldrucksensor 102, der über ein Abzweigstück 104 mit dem Ölkanal 100 verbunden ist.

Ferner trägt die Platine 98 auf der gegenüberliegenden Seite einen ersten Luftdrucksensor 106, der direkt mit dem Druckluftanschluss 82 in Verbindung steht. Ein zweiter Luftdrucksensor 108 steht mit einer Leckagekammer 110 in Verbindung, in welcher eine Nutmutter 112 angeordnet ist, welche die nicht gezeigten Lagerelemente der Drehdurchführung 32 axial zusammenhält.

Darüber hinaus trägt die Platine 98 einen Temperatursensor 114, einen Vibrationssensor 116 sowie einen optischen Ölleckagesensor 118. Der optische Ölleckagesensor 118 ist dabei am Rand der Leckagekammer 110 angeordnet und misst, die Veränderung eines Lichtreflexes durch vorhandenes Öl, das aufgrund der Drehbewegung der Nutmutter 112 in der Leckagekammer 110 und der damit einhergehenden Drehbewegung der Luft an den Rand gedrängt wird.

Schließlich trägt die Platine 98 eine Spule 120, die mit der aufmagnetisierten Nutmutter 112 zusammenarbeitet, um die Drehzahl der Drehdurchführung 32 zu bestimmen und um Energie zur Versorgung der aktiven elektronischen Komponenten zu gewinnen. Hierzu zählen auch ein Mikrocontroller 122 sowie ein nicht volatiler Datenspeicher 124, wie beispielsweise ein Flash-RAM.

Im Betrieb der Bearbeitungsmaschine arbeitet die Minimalmengenschmiereinrichtung 10 wie folgt:
Das Luftventil 30 wird geöffnet, wodurch die Druckluft über die Drehdurchführung 32, die Spindel 18 und die Übernahmeeinheit 20 in die Mischkammer 58 des Werkzeughalters 22 gelangt.

Zur Beimengung des Öls wird dann das Dosierventil 46, bei welchem es sich um ein elektrisch steuerbares Solenoid-Ventil handelt, dessen Ventilelement im geschlossenen Zustand vom anstehenden Öldruck an den Ventilsitz gepresst wird, in Abhängigkeit der Bearbeitungsparameter der Bearbeitungsmaschine in kurzen Pulsen geöffnet.

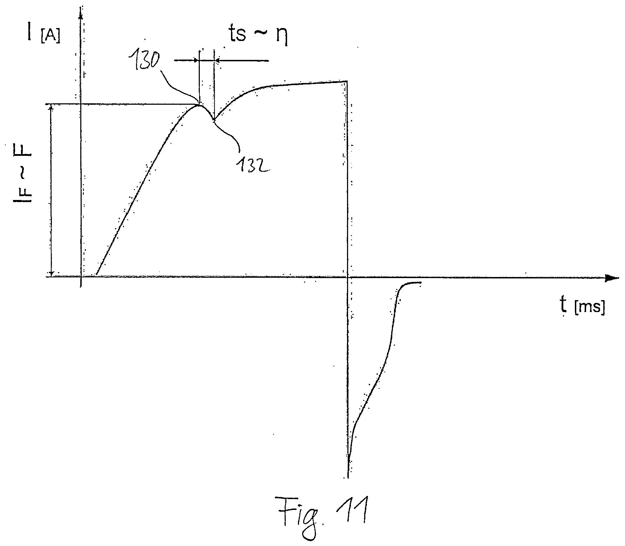

Figur 11 zeigt den Stromverlauf an der Spule des Solenoid-Ventils wenn die Öffnungsspannung angelegt wird. Zunächst steigt der Strom I an bis bei I=I_{F} eine ausreichende Magnetkraft erreicht ist, bei der sich das Ventilelement vom Ventilsitz abhebt. Diese Kraft ist proportional zu dem am Ventilelement anstehenden Öldruck.

Nach dem Abheben des Ventilelements vom Ventilsitz, liegt auf der Gegenseite des Ventilelements ebenfalls ein Öldruck an, wodurch sich die zur Bewegung des Ventilelements notwendige Kraft wieder verringert. Aufgrund der durch die Bewegung erzeugten magnetischen Gegenkraft geht dann der Strom I an der Spule zurück während das Ventilelement in seine Anschlagsposition fährt. Sobald das Ventilelement dort angekommen ist, steigt der Strom wieder bis zu einem konstanten Maximalwert.

Die Zeit ts, die das Ventilelement vom Abheben vom Ventilsitz bis zum Anschlagen in der Anschlagsposition benötigt ist dabei proportional zur Viskosität des Schmiermittels, in welchem sich das Ventilelement bewegt. Denn aufgrund des beidseitig am Ventilelement anstehenden Öldrucks wirkt auf das sich bewegende Ventilelement im Wesentlichen die durch die Viskosität bedingte Bremskraft und eine vorbekannte Federkraft des Ventils.

Die in der Steuerkarte 88 enthaltene Sensorik- und Steuerungseinheit 62 für das Dosierventil 46 umfasst nun Schaltungen zur Erfassung des Stromverlaufs an der Spule, beispielsweise einen Shunt. Der Mikroprozessor der Sensorik- und Steuerungseinheit 62 bestimmt dann über eine Ermittelung der beiden Wendepunkte 130 und 132 den vor dem Dosierventil 46 anstehenden Öldruck sowie die Viskosität des Schmiermittels.

Ferner kann im Ruhezustand des Ventilelements mit Hilfe der Sensorik- und Steuerungseinheit 62 der Widerstand an der Spule ermittelt werden, indem ein geringer konstanter Strom eingespeist wird, der nicht zu einer Bewegung des Ventilelements führt. Mit einem hochohmigen Stromkreis wird dabei der Spannungsabfall an der Spule ermittelt, der wiederum proportional zum Widerstand der Spule ist. Dieser Widerstand wird dann zur Ermittelung der Temperatur ausgewertet.

Darüber hinaus kann die Sensorik- und Steuerungseinheit 62 ein Fehlverhalten des Dosierventils 46 erkennen. Beispielsweise kann ein deutlich erhöhter Stromfluss auf einen Kurzschluss in der Spule des Dosierventils 46 oder kein Stromfluss auf einen Kabelbruch hindeuten.

Die ermittelten Informationen werden von der Sensorik- und Steuerungseinheit 62 dazu verwendet, um in Abhängigkeit des Öldrucks, der Viskosität und der Temperatur direkt am Dosierventil 46 Dosierungskorrekturen vorzunehmen. Auf diese Weise kann die Steuerlogik der Anlagensteuerung 66 schlank gehalten werden. Diese Informationen können aber auch über den Datenanschluss 96 an die Anlagensteuerung 66 übermittelt werden, die ebenfalls in Abhängigkeit von diesen Informationen im Zusammenspiel mit anderen Parametern, wie beispielsweise dem verwendeten Werkzeug und der Bearbeitungsgeschwindigkeit und/oder des Luftdrucks die Dosierung des Öls steuert oder den Öldruck am Ölförderer 40 variiert.

Durch den Internetzugang 72 kann die Sensorik- und Steuerungseinheit 62 des Dosierventils 46 sogar eine Fehlermeldung an den Hersteller absetzen, falls Abweichungen des Stromverlaufs vom üblichen Stromverlauf erkannt werden, die auf einen baldigen Ausfall des Bauteils hinweisen. Der Hersteller kann daraufhin proaktiv eine Ersatzteillieferung in Gang setzen.

Die Überwachung der Drehdurchführung 32 erfolgt über die ihr zugehörige Sensorik- und Steuerungseinheit 64, die an den mechanischen Teil der Drehdurchführung 32 angeflanscht ist. Dabei geht es bei der Überwachung der Drehdurchführung in erste Linie um das Erkennen eines Lagerschadens.

Der Vibrationssensor misst dazu die Vibrationen am Gehäuse der Drehdurchführung 32. Durch geeignete Filterung bei der Auswertung können dabei Frequenzen aus den Vibrationen ermittelt werden, die maßgeblich durch die Kugellager verursacht werden. Veränderungen in den betreffenden Frequenzen können dann auf eine Schädigung der Kugellager hinweisen. Der Mikrocontroller 122 vergleicht daher aktuelle Ergebnisse der Auswertung mit bereits im Datenspeicher 124 abgelegten Ergebnissen oder Vorgaben. Im Bedarfsfall setzt die Sensorik- und Steuerungseinheit 64 auch hier über den Internetzugang 72 entsprechende Meldungen an den Betreiber oder den Hersteller der Minimalmengenschmiereinrichtung 10 ab, wo dann gegebenenfalls einen Serviceeinsatz angestoßen wird.

Auch der Temperatursensor 114 kann zur Erkennung eines Lageschadens herangezogen werden, da die Temperatur der Kugellager im Falle eines Lagerschadens zunimmt. Über das Gehäuse wird die entstehende Wärme an den auf der Platine 98 angeordneten Temperatursensor 114 übertragen, der zugleich ein Überhitzen der Elektronik erkennen kann.

Die Leckagemengen an Druckluft und Öl, die an der Drehdurchführung 32 austreten, geben ebenfalls Aufschluss über den Zustand der Drehdurchführung, insbesondere über die Dichtheit der Übergänge vom stehenden auf den drehenden Teil. Über den ersten Luftdrucksensor 106 kann der am Druckluftanschluss 82 anstehende Luftdruck gemessen werden. Der zweite Luftdrucksensor 108 kann die Luftleckage bestimmen, wobei diese in Relation zum Luftdruck am Druckluftanschluss 82 und der Drehzahl bewertet wird, da ein höherer Luftdruck und eine kleinere Drehzahl eine höhere Leckage zur Folge haben.

Aus all diesen Informationen berechnet die Sensorik- und Steuerungseinheit 64 der Drehdurchführung 32 deren restliche Lebensdauer, die an die Anlagensteuerung 66 oder ggf. direkt an den Hersteller übermittelt wird.

Durch die interne Energieversorgung kann die Sensorik- und Steuerungseinheit 64 autark ohne Kabelanschluss betrieben werden und nur zeitweise z.B. bei einem Serviceeinstz ausgelesen werden. Auch eine kabellose Kommunikationsverbindung ist auf diese Weise realisierbar. Ein Energiespeicher 121 hilft kurze Standzeiten der Spindel 18 zu überbrücken.

## Patentansprüche

1. Vorrichtung zur Minimalmengenschmierung (10) für eine Bearbeitungsmaschine mit einer drehenden Spindel (18), mit
a) einer Drehdurchführung (32), über welche der drehenden Spindel (18) der Bearbeitungsmaschine Druckluft und Schmiermittel zuführbar sind, um diese in einer Mischkammer (58) nahe eines Werkzeugs (24) zusammenzuführen, und
b) einem Dosierventil (46), mit welchem die Menge des zugeführten Schmiermittels dosierbar ist,
c) die Drehdurchführung (32) und/oder das Dosierventil (46) als smarte Komponenten ausgebildet sind,
**dadurch gekennzeichnet, dass**
d) das Dosierventil (46) eine zugehörige Sensorik- und Steuerungseinheit (62) mit eigenem Mikroprozessor aufweist, welche den Betriebszustand des Dosierventils (46) eigenständig erfassen und auswerten kann, und dass
e) die Sensorik- und Steuerungseinheit (62) eine Schaltung aufweist, mit der sich der Stromverlauf über eine Magnetspule des Dosierventils (46) beim Öffnen des Dosierventils (46) erfassen lässt, wobei der Mikroprozessor diesen Stromverlauf auswertet, um einen am Dosierventil (46) anliegenden Schmiermitteldruck und/oder die Viskosität des Schmiermittels zu bestimmen.

2. Vorrichtung nach Anspruch 1, **dadurch gekennzeichnet, dass** die Schaltung einen Shunt oder einen Hallsensor aufweist.

3. Vorrichtung nach Anspruch 1, **dadurch gekennzeichnet, dass** die Sensorik- und Steuerungseinheit (62) derart eingerichtet ist, dass sie in Abhängigkeit des Schmiermitteldrucks und/oder der Viskosität des Schmiermittels eine Dosierungskorrektur vornimmt, insbesondere die Öffnungszeit des Dosierventils (46) anpasst.

4. Vorrichtung nach einem der vorhergehenden Ansprüche, **dadurch gekennzeichnet, dass** die Drehdurchführung (32) eine zugehörige Sensorik- und Steuerungseinheit (64) mit eigenem Mikroprozessor aufweist, welche den Betriebszustand der Drehdurchführung (32) eigenständig erfassen und auswerten kann.

5. Vorrichtung nach Anspruch 4, **dadurch gekennzeichnet, dass** die Sensorik- und Steuerungseinheit (64) der Drehdurchführung (32) mindestens einen der folgenden Sensoren umfasst: einen Luftdrucksensor (106) für den eingehenden Luftdruck; einen Luftdrucksensor (108) für den Luftleckagedruck; einen Sensor für den Öldruck (102); einen optischen Ölleckagesensor (118); einen Drehzahlgeber (120); einen Vibrationssensor (116); einen Temperatursensor (114).

6. Vorrichtung nach einem der vorhergehenden Ansprüche, **dadurch gekennzeichnet, dass** die smarte Komponenten einen vorzugsweise nicht-volatilen Datenspeicher (124) aufweisen, in welchem Auswertungsdaten gespeichert werden können.

7. Verfahren zum Betreiben einer Vorrichtung (10) zur Minimalmengenschmierung für eine Bearbeitungsmaschine mit folgenden Schritten:
a) Bereitstellen einer Vorrichtung (10) zur Minimalmengenschmierung nach einem der vorhergehenden Ansprüche;
b) Aktivieren der Vorrichtung (10) zur Minimalmengenschmierung;
c) Überwachen der Funktionsweise der Vorrichtung (10) zur Minimalmengenschmierung mit Hilfe der smarten Komponenten.

## Claims

1. A microlubrication system (10) for a machining unit having a rotating spindle (18), comprising
a) a rotary feedthrough (32), via which compressed air and lubricant can be fed to the rotating spindle (18) of the machining unit in order to combine them in a mixing chamber (58) close to a tool (24), and
b) a metering valve (46), with which the quantity of the lubricant fed can be metered,
c) the rotary feedthrough (32) and/or the metering valve (46) are designed as smart components,
**characterized in that**
d) the metering valve (46) has an associated sensor and control unit (62) having a dedicated microprocessor, which can independently detect and evaluate the operating state of the metering valve (46), and **in that**
e) the sensor and control unit (62) has a circuit, with which the current profile across a magnet coil of the metering valve (46) during opening of the metering valve (46) can be detected, wherein the microprocessor can evaluate said current profile in order to determine a lubricant pressure bearing against the metering valve (46) and/or the viscosity of the lubricant.

2. The system as claimed in claim 1, **characterized in that** the circuit comprises a shunt or a Hall sensor.

3. The system as claimed in claim 1, **characterized in that** the sensor and control unit (62) is designed in such a manner that it performs a metering correction, in particular adapts the opening time of the metering valve (46), depending on the lubricant pressure and/or the viscosity of the lubricant.

4. The system as claimed in any of the preceding claims, **characterized in that** the rotary feedthrough (32) has an associated sensor and control unit (64) having a dedicated microprocessor, which can independently detect and evaluate the operating state of the rotary feedthrough (32).

5. The system as claimed in claim 4, **characterized in that** the sensor and control unit (64) of the rotary feedthrough (32) comprises at least one of the following sensors: an air pressure sensor (106) for the incoming air pressure; an air pressure sensor (108) for the air leakage pressure; a sensor for the oil pressure (102); an optical oil leakage sensor (118); a rotational speed sensor (120); a vibration sensor (116); a temperature sensor (114).

6. The system as claimed in any of the preceding claims, **characterized in that** the smart components have a preferably non-volatile data storage device (124), in which evaluation data can be stored.

7. A method for operating a microlubrication system (10) for a machining unit, comprising the following steps:
a) Providing a microlubrication system (10) as claimed in one of the preceding claims;
b) Activating the microlubrication system (10);
c) Monitoring the operation of the microlubrication system (10) with the aid of the smart components.

## Revendications

1. Dispositif (10) de lubrification en quantités minimales, destiné à une machine d'usinage munie d'une broche rotative (18), comprenant :
a) une traversée rotative (32) par l'intermédiaire de laquelle de l'air comprimé et un agent lubrifiant peuvent être délivrés à ladite broche rotative (18) de la machine d'usinage, de manière à les regrouper dans une chambre de mélange (58), à proximité d'un outil (24), et
b) une vanne de dosage (46) par laquelle la quantité de l'agent lubrifiant délivré peut être dosée,
c) ladite traversée rotative (32) et/ou ladite vanne de dosage (46) étant réalisée(s) en tant que composant(s) intelligent(s),
**caractérisé par le fait que**
d) la vanne de dosage (46) comporte une unité associée (62) de détection et de commande, qui est équipée d'un propre microprocesseur et peut détecter et évaluer, de manière autonome, l'état de fonctionnement de ladite vanne de dosage (46) ; et **par le fait que**
e) ladite unité (62) de détection et de commande est pourvue d'un circuit au moyen duquel l'allure du courant peut être détectée par l'intermédiaire d'une bobine magnétique de la vanne de dosage (46), lors de l'ouverture de ladite vanne de dosage (46), sachant que le microprocesseur peut évaluer cette allure du courant afin de déterminer une pression de l'agent lubrifiant agissant sur ladite vanne de dosage (46), et/ou la viscosité dudit agent lubrifiant.

2. Dispositif selon la revendication 1, **caractérisé par le fait que** le circuit est muni d'un branchement en dérivation, ou d'un capteur à effet Hall.

3. Dispositif selon la revendication 1, **caractérisé par le fait que** l'unité (62) de détection et de commande est agencée de façon telle qu'elle procède à une correction du dosage en fonction de la pression de l'agent lubrifiant et/ou de la viscosité dudit agent lubrifiant, et qu'elle adapte notamment le temps d'ouverture de la vanne de dosage (46).

4. Dispositif selon l'une des revendications précédentes, **caractérisé par le fait que** la traversée rotative (32) est pourvue d'une unité associée (64) de détection et de commande, qui est équipée d'un propre microprocesseur et peut détecter et évaluer, de manière autonome, l'état de fonctionnement de ladite traversée rotative (32).

5. Dispositif selon la revendication 4, **caractérisé par le fait que** l'unité (64) de détection et de commande de la traversée rotative (32) inclut au moins l'un des capteurs suivants : un capteur (106) de pression d'air, affecté à la pression d'air entrante ; un capteur (108) de pression d'air, affecté à la pression de fuites d'air ; un capteur (102) affecté à la pression d'huile ; un capteur optique (118) de fuites d'huile ; un tachymètre (120) ; un capteur de vibrations (116) ; un capteur de température (114).

6. Dispositif selon l'une des revendications précédentes, **caractérisé par le fait que** les composants intelligents présentent une mémoire de données (124) préférentiellement non volatile, dans laquelle des données d'évaluation peuvent être stockées.

7. Procédé d'actionnement d'un dispositif (10) de lubrification en quantités minimales, destiné à une machine d'usinage, comprenant les étapes suivantes consistant à :
a) fournir un dispositif (10) conforme à l'une des revendications précédentes, dévolu à la lubrification en quantités minimales ;
b) activer ledit dispositif (10) en vue de la lubrification en quantités minimales ;
c) surveiller, à l'aide des composants intelligents, le mode de fonctionnement dudit dispositif (10) de lubrification en quantités minimales.
